# FASCICULE DE BREVET EUROPEEN

(11) **EP 2 436 133 B1**
(45) Date de publication et mention de la délivrance du brevet: **15.01.2014**
(21) Numéro de dépôt: 10714918.9
(22) Date de dépôt: 03.03.2010
(51) Int. Cl.: H04L 1/00, H04L 27/00, H04L 27/34, H04L 27/18

(54) **TRANSMETTEUR DE DONNEES MULTI-FORMAT**
SENDER FÜR MULTI-FORMAT-DATEN
TRANSMITTER FOR MULTI-FORMAT DATA

(30) Priorité: 29.05.2009 FR 0953602
(43) Date de publication de la demande: 04.04.2012
(73) Titulaire: Alcatel Lucent, 75007 Paris (FR)
(72) Inventeur: CHARLET, Gabriel, F-91620 Nozay (FR); RENAUDIER, Jérémie, F-91620 Nozay (FR)
(74) Mandataire: Mouney, Jérôme
(86) Numéro de dépôt international: PCT/FR2010/050356
(87) Numéro de publication internationale: WO 2010/136680

(56) Documents cités:
- EP-A1- 1 011 245
- WO-A2-2006/109123

## Description

L'invention se rapporte au domaine de la transmission de données numériques, en particulier aux transmissions optiques.

Dans les réseaux de communication, les formats de modulation avancés sont des ingrédients essentiels pour réaliser des transmissions de données performantes. Du fait de la variété des supports de transmission employés et de la variété des perturbations susceptibles d'affecter les signaux, il n'existe pas de format de modulation universellement supérieur. Dans le domaine des transmissions optiques, la recherche de débits de données de plus en plus élevés, par exemple de l'ordre de 100 Gbit/s/canal, a révélé les très bonnes performances des formats de modulation par saut de phase quadratiques (QPSK).

Pour améliorer la flexibilité des réseaux de communication, une voie possible est de concevoir des transmetteurs de données à débit variable. Plusieurs solutions ont été proposées pour cela. Par exemple, le document « Bit-Rate-Flexible All-Optical OFDM Transceiver Using Variable Multi-Carrier Source and DQPSK/DPSK Mixed Multiplexing », K. Yonenaga et al., in Actes de OFC/NFOEC 2009 divulgue un transmetteur optique OFDM dans lequel le débit de données peut être ajusté en modifiant le nombre de signaux sous-porteurs et/ou en sélectionnant le format de modulation de chaque sous-porteur entre un format DQPSK (modulation par saut de phase quadratique différentielle) et un format DPSK (modulation par saut de phase binaire différentielle) - voir aussi WO 2006/109123 publié le 19 Oct. 2006 (NOKIA CORP.[FI]).

Selon un mode de réalisation, l'invention fournit un transmetteur de données comportant :
un premier modulateur d'amplitude apte à moduler un premier signal porteur en fonction d'un premier signal de données,
un deuxième modulateur d'amplitude apte à moduler un deuxième signal porteur en fonction d'un deuxième signal de données,
un combineur de signaux apte à diriger vers une sortie du transmetteur de données une combinaison du premier signal porteur modulé venant du premier modulateur d'amplitude et du deuxième signal porteur modulé venant du deuxième modulateur d'amplitude, et
un module de données apte à engendrer lesdits premier et deuxième signaux de données avec une cadence de modulation commune,
dans lequel, dans un premier mode de fonctionnement du transmetteur, lesdits premier et deuxième signaux porteurs sont mutuellement déphasés et ledit module de données engendre lesdits premier et deuxième signaux de données à partir de données différentes, de manière à produire à la sortie du transmetteur un signal modulé présentant une première constellation d'états dans un plan complexe et, dans un deuxième mode de fonctionnement du transmetteur, ledit module de données engendre lesdits premier et deuxième signaux de données corrélés l'un à l'autre à partir de données communes, de manière à produire à la sortie du transmetteur un signal modulé présentant une deuxième constellation d'états dans le plan complexe plus réduite et plus dispersée que ladite première constellation d'états.

Selon un mode de réalisation particulier, la deuxième constellation d'états est un sous-ensemble de la première constellation d'états. Par exemple, il est possible de contraindre les valeurs numériques des deux signaux de données dans le deuxième mode de fonctionnement, par exemple de les rendre égales, de manière à ce que certains état de la première constellation ne soient jamais atteints, ce qui a pour effet d'encoder les données sur un sous-ensemble de la première constellation. De préférence, ce sous-ensemble présente une distance euclidienne minimale plus grande que la distance euclidienne minimale de la première constellation complète.

Outre les valeurs numériques transmises, un autre paramètre physique susceptible d'influencer les constellations d'états du signal transmis est le déphasage entre le premier et le deuxième signal porteur.

Selon un mode de réalisation particulier, le premier et le deuxième signal porteur sont sensiblement en quadrature de phase dans le premier mode de fonctionnement du transmetteur. Par exemple dans ce cas, la première constellation d'états peut être une constellation QPSK ou QAM (modulation d'amplitude quadratique). Selon des mode de réalisation correspondants, la deuxième constellation d'états peut être une constellation BPSK ou QAM.

Le déphasage entre le premier et le deuxième signal porteur peut être maintenu constant dans les deux modes de fonctionnement du transmetteur. Par exemple dans ce cas, les premier et deuxième signaux porteurs peuvent aussi être sensiblement en quadrature de phase dans le deuxième mode de fonctionnement du transmetteur.

Selon un mode de réalisation alternatif, le déphasage entre les premier et deuxième signaux porteurs peut être modifié entre le premier et le deuxième mode de fonctionnement du transmetteur, par exemple pour réduire ou sensiblement annuler ce déphasage. Selon un mode de réalisation particulier, lesdits premier et deuxième signaux porteurs sont sensiblement en phase dans le deuxième mode de fonctionnement du transmetteur. Cette réduction ou annulation du déphasage dans le deuxième mode de fonctionnement peut accroître la dispersion de la deuxième constellation d'états.

De nombreuses possibilités existent pour engendrer les signaux porteurs, par exemple à l'aide de deux sources de signal respectives, éventuellement munies de moyens de contrôle de la phase des signaux. Alternativement, les signaux porteurs peuvent être produits à partir d'un source commune.

Selon un mode de réalisation particulier, le transmetteur comporte un diviseur de signal apte à produire les premier et deuxième signaux porteurs par division d'un signal source en dirigeant une première fraction du signal source vers une première branche de transmission comportant le premier modulateur d'amplitude et une deuxième fraction du signal source vers une deuxième branche de transmission comportant le deuxième modulateur d'amplitude.

De préférence, le transmetteur comporte un dispositif déphaseur disposé dans au moins une desdites branches de transmission et apte à appliquer un déphasage entre le premier signal porteur et le deuxième signal porteur. Selon un mode de réalisation particulier, le dispositif déphaseur est apte à appliquer un déphasage réglable. Par exemple, le dispositif déphaseur applique un déphasage de quadrature dans le premier mode de fonctionnement et un déphasage réduit, de préférence sensiblement nul, dans le deuxième mode de fonctionnement. D'autres modes de réalisation sont possibles pour réaliser des moyens de réglage du déphasage entre lesdits premier et deuxième signaux porteurs.

Selon les applications, les signaux porteurs peuvent être choisis dans différentes parties du spectre électromagnétique, par exemple le domaine microonde, le domaine infrarouge ou le domaine optique.

Selon un mode de réalisation particulier, les signaux porteurs sont des signaux optiques et les modulateurs d'amplitude comportent des modulateurs de Mach-Zehnder. En particulier, des modulateurs de Mach-Zehnder peuvent être utilisés en tant que modulateurs de phase, puisqu'une multiplication de l'amplitude du champ par un facteur -1 est équivalente à un déphasage de 180°.

Selon d'autres modes de réalisation avantageux, le noeud de communication peut présenter une ou plusieurs des caractéristiques suivantes :
- une interface de commande apte à recevoir un signal de commande pour placer sélectivement le transmetteur dans le premier ou le deuxième mode de fonctionnement.
- le module de données comporte une interface d'entrée de données apte à recevoir un flux de données à transmettre et un module de traitement apte à traiter ledit flux de données à transmettre pour engendrer lesdits premier et deuxième signaux de données, ledit module de traitement étant apte à traiter un flux de données d'un premier débit dans la premier mode de fonctionnement et un flux d'un deuxième débit plus faible dans le deuxième mode de fonctionnement du transmetteur.
- l'interface d'entrée de données comporte une pluralité de lignes d'entrée parallèles pour recevoir des flux entrants parallèles composant le flux de données à transmettre.
- le module de données est apte à désactiver sélectivement un sous-ensemble desdites lignes d'entrée parallèles dans le deuxième mode de fonctionnement du transmetteur.
- le module de traitement comporte un module de conversion parallèle-série pour produire les premiers et deuxième signaux de données à partir d'une pluralité desdits flux entrants parallèles, les flux entrants présentant une cadence de données commune inférieure à ladite cadence de modulation des premiers et deuxième signaux de données.
- le module de traitement comporte un module de codage FEC pour appliquer un code correcteur d'erreur au flux de données à transmettre. Le codage FEC peut être constant ou variable d'un mode de fonctionnement à l'autre. Par exemple, le codage FEC présente un surdébit d'environ 30% avec 40Gb/s de flux entrant pour arriver à un débit de 56Gb/s dans une transmission PDM-BPSK et un surdébit d'environ 12% avec 100Gb/s de flux entrant pour arriver à un débit de 11 2Gb/s dans une transmission PDM-QPSK.

Selon un mode de réalisation, l'invention fournit également un ensemble transmetteur de données par multiplexage de polarisation, comportant un premier transmetteur de données précité pour produire à la sortie du premier transmetteur de données un premier signal modulé présentant un premier état de polarisation, un deuxième transmetteur de données précité pour produire à la sortie du deuxième transmetteur de données un deuxième signal modulé présentant un deuxième état de polarisation et un combineur de signaux apte à diriger vers une sortie de l'ensemble transmetteur une combinaison du premier signal modulé venant du premier transmetteur de données et du deuxième signal modulé venant du deuxième transmetteur de données.

Une idée à la base de l'invention est de concevoir un transmetteur de données à débit variable dans lequel il est possible d'employer sélectivement au moins deux constellations d'états pour le signal transmis, de manière à employer soit une constellation plus nombreuse et plus dense, permettant d'obtenir un plus haut débit de transmission de données, soit une constellation plus réduite et plus dispersée, permettant d'obtenir une plus grande robustesse du signal aux perturbations au prix d'une réduction du débit de transmission. Une autre idée à la base de l'invention est d'obtenir un signal modulé avec une constellation plus dispersée en superposant plusieurs composantes porteuses portant des modulations corrélées l'une à l'autre, de manière que ces composantes se combinent de manière constructive dans leurs différents états de modulation. Encore une autre idée à la base de l'invention est d'effectuer la sélection de la constellation sans changer la cadence de transmission des symboles, de manière à simplifier la mise en oeuvre de la chaîne de traitement du signal dans un tel transmetteur. La mise en oeuvre d'un récepteur correspondant peut aussi être facilitée par l'utilisation d'une cadence d'horloge constante. Selon un mode deréalisation, une réception optique cohérente peut être utilisée.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une représentation schématique fonctionnelle d'un transmetteur de données selon un premier mode de réalisation,
La figure 2 est un diagramme représentant des exemples des constellations pouvant être utilisées dans des modes de réalisation de l'invention,
La figure 3 est une représentation schématique fonctionnelle d'un transmetteur de données selon un deuxième mode de réalisation,
La figure 4 est une représentation schématique fonctionnelle d'un module de données pouvant être utilisé dans des modes de réalisation de l'invention,
Les figures 5 et 6 représentent d'autres exemples de constellations pouvant être utilisées dans des modes de réalisation de l'invention.

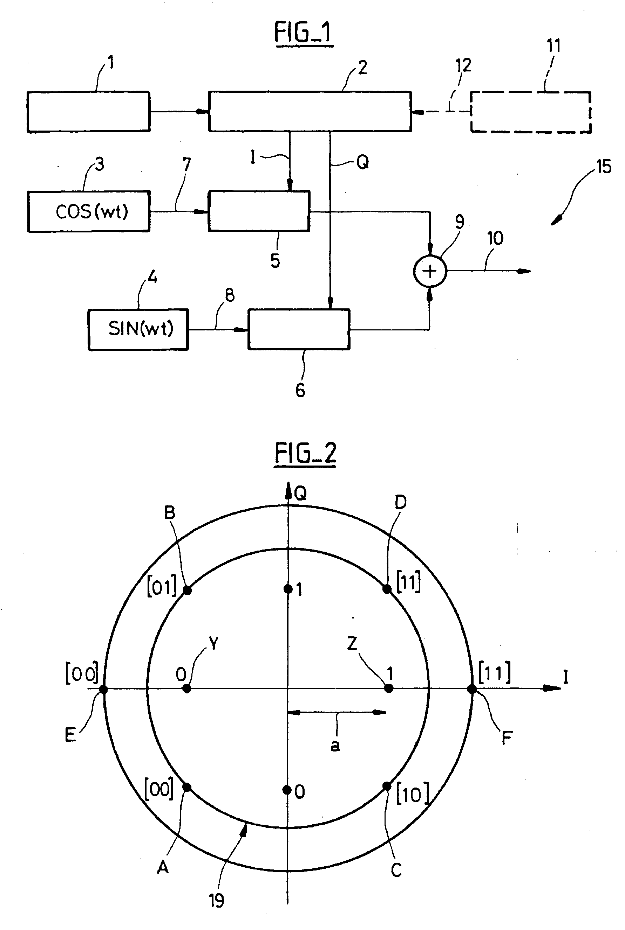

En référence à la figure 1, un transmetteur de données 15 comporte une source de données 1 comportant des données numériques à transmettre, un module de données 2 pour former des signaux de modulation I(t) et Q(t) à partir des données numériques, deux générateurs de signaux porteurs en quadrature de phase 3 et 4, un modulateur d'amplitude 5 pour moduler le premier signal porteur 7 avec le signal de modulation 1, un modulateur d'amplitude 6 pour moduler le deuxième signal porteur 8 avec le signal de modulation Q, et un additionneur de signaux pour transmettre la somme des deux signaux porteurs modulés vers la sortie de signal 10 du transmetteur. Par exemple le signal de sortie S(t) peut prendre la forme :
S(t) = I(t).COS(wt) + Q(t).SIN(wt), où w désigne la fréquence porteuse.

Les signaux I et Q ont de préférence la même cadence de modulation en Baud. Le module de données 2 comporte une interface de commande pour recevoir un signal de commande 12, par exemple depuis une unité de commande 11. Le signal de commande 12 sélectionne un mode de fonctionnement du module de données 2 parmi deux modes prévus. Dans un premier mode de fonctionnement, les signaux de modulation I et Q portent chacun un sous-ensemble différent des données à transmettre, de manière à maximiser le débit de données sortant du transmetteur 15. Par exemple, le format de modulation du signal sortant est un format 4-QAM (pouvant aussi être désigné par QPSK) lorsque les signaux de modulation I et Q ont chacun deux états logiques. Des format de modulation N-QAM, N étant un entier supérieur à 4, par exemple 8, 16 ou 64 ou autre, peuvent être obtenus de manière similaire avec des signaux de modulation I et Q ayant d'avantage d'états logiques. Les diagrammes de constellation de ces formats de modulation dans le plan complexe sont connus.

Dans un deuxième mode de fonctionnement, les signaux de modulation I et Q portent des ensembles de données à transmettre qui se recouvrent au moins partiellement, de manière à produire une constellation d'états à la fois plus réduite et plus dispersée que dans le premier mode de fonctionnement. En d'autres termes la constellation obtenue dans le deuxième mode de fonctionnement comporte moins d'états et ces états sont en moyenne plus éloignés les uns des autres que dans le premier mode de fonctionnement. De préférence, la distance euclidienne minimale entre deux états de la deuxième constellation est inférieure à la distance euclidienne minimale entre deux états de la première constellation.

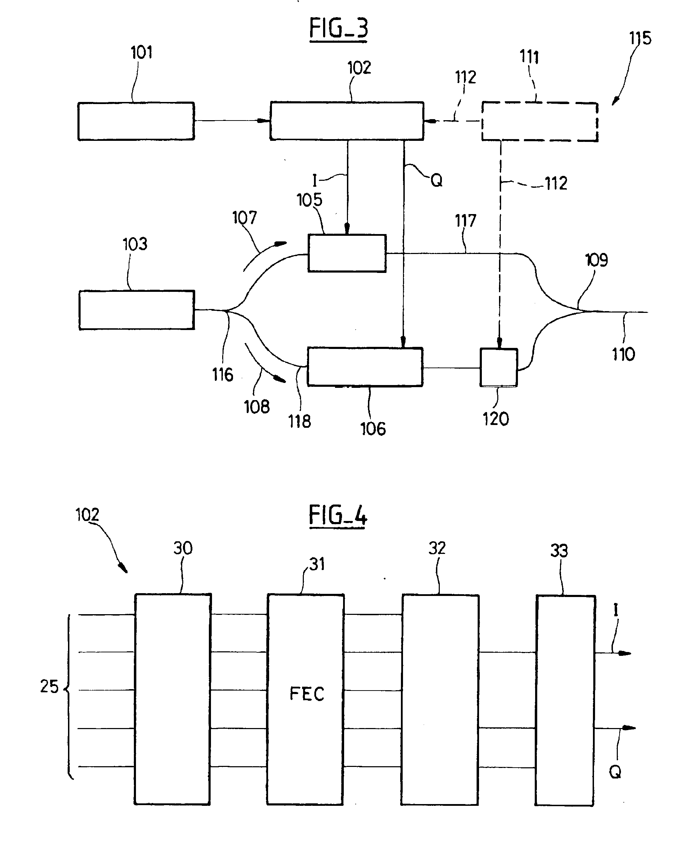

Selon un exemple de réalisation, les signaux I et Q dans le deuxième mode de fonctionnement portent exactement les mêmes données, de sorte que I(t) = Q(t). La figure 3 représente des constellations obtenues dans ce cas avec des signaux de modulation I et Q ayant chacun deux états logiques 0 et 1. Dans le premier mode de fonctionnement, on obtient une constellation QPSK (ou 4-QAM) présentant 4 états de modulation (ou symboles) 00, 01, 10 et 11 représentés aux points A,B, C, D. Ces états sont placés sensiblement sur un cercle 19 de rayon a√2, où a est l'amplitude des signaux de modulation I et Q.

Dans le deuxième mode de fonctionnement, I et Q transportent le même flux binaire de sorte que les états B et C ne sont plus jamais atteints. Il en résulte une constellation réduite formée des points A et D, c'est-à-dire une constellation BPSK, dont la distance euclidienne minimale est augmentée d'un facteur √2 par rapport à la constellation QPSK, ce qui permet de gagner 3dB en puissance détectée. Des avantages similaires seriaent obtenus avec le choix I(t) + Q(t) = 0.

Par comparaison, si la réduction du débit de données était réalisée en annulant le signal de modulation Q, la constellation résultante représentée aux points Y et Z présenterait une distance euclidienne minimale diminuée d'un facteur √2 par rapport à la constellation QPSK.

Selon un autre mode de réalisation, le générateur de signal 4 est capable de régler la phase du signal porteur 8 et capable de recevoir directement ou indirectement le signal de commande 12 pour effectuer ce réglage de phase en fonction du mode de fonctionnement sélectionné. Dans ce mode de réalisation, le déphasage du signal porteur 8 peut être réduit dans le deuxième mode de fonctionnement pour accroître l'interférence constructive des deux composantes modulées. La figure 3 représente aux points E et F la constellation modifiée obtenue dans le deuxième mode de fonctionnement lorsque le déphasage entre les deux signaux porteurs est annulé. La distance euclidienne minimale est alors augmentée d'un facteur 2 par rapport à la constellation QPSK, ce qui permet de gagner 6dB en puissance détectée.

La source de données 1 peut être réalisée de différentes manières, par exemple sous la forme de mémoires ou autres dispositifs de stockage de données. Le module de données 2 comporte une interface d'entrée reliée à la source de données 1 par des liens optiques ou électriques, par exemple de type 10Gigabit Ethernet ou tout autre type de liaison de données.

Le transmetteur 15 peut être réalisé pour des pulsations porteuses w appartenant à différentes parties du spectre électromagnétique, par exemple les ondes radio. En référence à la figure 3, on décrit maintenant un mode de réalisation d'un transmetteur spécifiquement adapté au domaine optique. Les éléments identiques ou analogues à ceux de la figure 1 portent le même chiffre de référence augmenté de 100.

Le transmetteur optique 115 comporte une source laser 103, un diviseur de faisceau 116 qui divise de manière égale le faisceau source en un premier faisceau porteur 107 se propageant dans une branche de guide d'onde 117 et un deuxième faisceau porteur 108 se propageant dans une branche de guide d'onde 118. Sur chaque branche de guide d'onde est placé un modulateur d'amplitude 105 et 106 de type Mach-Zehnder alimenté respectivement par l'un des signaux I(t) et Q(t) délivrés par le module de données 102. Un déphaseur 120 est monté sur la branche 118 pour appliquer un retard de phase de 90° au deuxième faisceau porteur 108. Le déphaseur 120 est de préférence réalisé sous la forme d'une électrode de retard réglable. Un coupleur optique 109 superpose les deux faisceaux porteurs modulés. En contrôlant le module de données 102 et, le cas échéant, le déphaseur 120 de la même manière que dans le mode de réalisation de la figure 1, le transmetteur optique 115 permet d'obtenir les mêmes constellations que sur la figure 2. En variante, un générateur d'impulsion non représenté peut être monté en série avec les modulateurs 105 et 106 selon la technique connue, par exemple avant le diviseur 116 ou après le coupleur 109, pour produire des signaux au format de modulation RZ-QPSK et RZ-BPSK respectivement dans le premier et le deuxième mode de fonctionnement.

Le transmetteur 115 peut être employé pour réaliser des transmissions optiques à débit variable atteignant par exemple un débit de données de 56Gb/s au format QPSK dans le premier mode de fonctionnement et 28Gb/s au format BPSK dans le deuxième mode de fonctionnement pour des signaux I et Q à 28 GBaud. De préférence, la cadence des signaux I et Q n'est pas modifiée entre les deux modes de fonctionnement, de sorte que le module de données 102 peut être réalisé avec des composants à débit fixe. Par un tel changement de format de modulation, la robustesse du signal aux perturbations est fortement augmentée, ce qui permet d'atteindre une distance de transmission plus élevée.

En référence à la figure 4, on décrit maintenant un mode de réalisation détaillé du module de données 102 convenant par exemple pour des flux de données entrants répondant au standard 10Gb Ethernet. Le module de données 102 comporte un module d'agrégation et de mise en trame 30 muni de cinq entrées 25 à 10Gb/s. Dans le premier mode de fonctionnement, le module 30 peut recevoir cinq flux entrants parallèles. Les données traitées par le module 30 sont passées à un module de codage correcteur d'erreur vers l'avant 31 également sous la forme de cinq flux parallèles à 10Gb/s. Les données encodées par le module 31 sont passées à un module de conversion parallèle-série 32 également sous la forme de cinq flux parallèles, à un débit augmenté en fonction du code utilisé, par exemple à 11,2Gb/s. Le module 32 convertit ces cinq flux entrants en deux flux parallèles à un débit de 28Gb/s qui sont passés à des pilotes ou amplificateurs électroniques 33 pour produire les signaux de modulation analogiques I et Q.

Dans le deuxième mode de fonctionnement, le module 30 traite un débit entrant diminué de moitié, par exemple en désactivant complètement deux des entrées 25 et en réduisant le débit sur une troisième des entrées 25. Avec ces données, le signal de modulation I peut être produit de la même manière que dans le premier mode de fonctionnement. De plus, le flux de données reçu est dupliqué à un niveau de la chaîne de traitement, par exemple au niveau du module de mise en trame 30 ou au niveau du module de codage correcteur d'erreur vers l'avant 31, de sorte que le signal de modulation Q soit produit à partir du même flux de données que le signal I. Pour les composants situés à l'aval de l'opération de duplication, par exemple le module de conversion parallèle-série 32 et les pilotes 33, le changement de mode de fonctionnement du transmetteur peut être totalement transparent. Aucune complexité n'est donc ajoutée au niveau de ces composants par rapport à un transmetteur à débit fixe.

En variante, le, ratio des débits entrants entre le premier et le deuxième mode de fonctionnement peut être différent de deux. Par exemple, la performance du codage FEC, et donc le surdébit correspondant, peuvent être modifiés entre les deux modes de fonctionnement. Pour un même débit sortant, l'accroissement du surdébit FEC permet de traiter un débit entrant moins élevé.

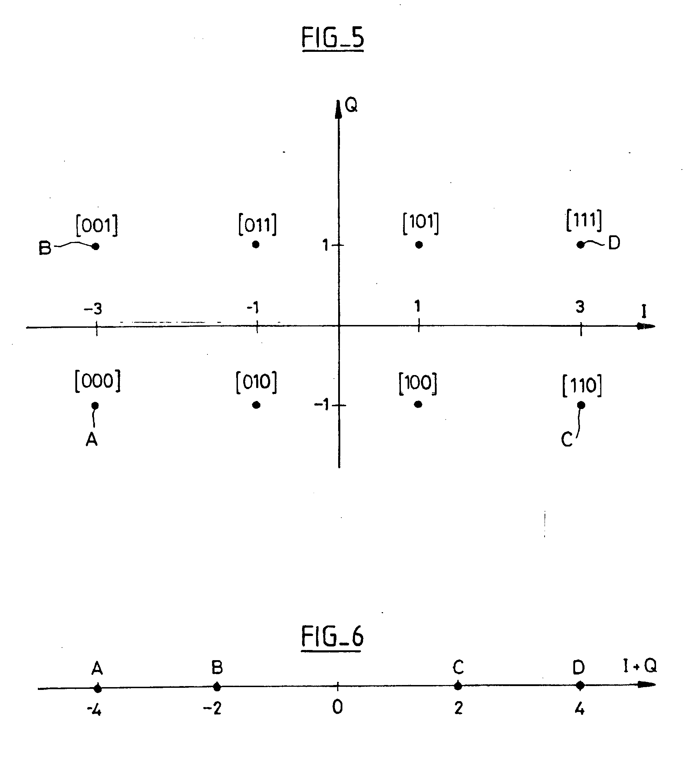

En référence aux figure 5 et 6, on décrit un autre exemple de constellations QAM pouvant être utilisées pour réaliser des transmissions à débit variable. Dans cet exemple, le signal de modulation I est un signal à quatre niveaux qui encode donc deux bits B1 B2 par coup d'horloge. Le signal de modulation Q est un signal à deux niveaux qui encode un bit B0 par coup d'horloge. Le transmetteur correspondant peut être réalisé similairement à la figure 1. Un symbole valant trois bit [B0B1B2] est ainsi transmis en sortie. Dans le premier mode fonctionnement, les symboles sont exploités pour transporter des données au débit nominal, à savoir 3f, où f est la cadence d'horloge en Baud. Dans un deuxième mode de fonctionnement, le signal Q est formé partiellement à partir des mêmes données que le signal I, de sorte que B0=B1 à tout instant. Le débit de données est réduit à 2f. La constellation utilisée dans le deuxième mode de fonctionnement est réduite aux symboles 000, 001, 110 et 111 désignés par les points A, B, C ,D. La distance euclidienne minimale est inchangée, mais la dispersion de la constellation est globalement accrue. La figure 6 représente l'allure de la deuxième constellation si le déphasage entre les deux signaux porteurs est supprimé dans le deuxième mode de fonctionnement.

D'autres modes de réalisation de transmetteurs peuvent présenter plus de deux modes de fonctionnement, avec autant de constellations de plus en plus réduites pour atteindre des distances de transmission de plus en plus longues.

On a essentiellement décrit un transmetteur de signal permettant d'ajuster le débit de données sur un canal porteur entre plusieurs valeurs. L'ajustement de débit obtenu sur un canal peut être obtenu de manière démultipliée en utilisant des techniques de multiplexage de canaux dans lesquelles le débit de chaque canal est ajusté comme décrit précédemment. Par exemple, des canaux optiques peuvent être multiplexés par division de polarisation et/ou division de longueurs d'onde. Dans un mode de réalisation correspondant, un transmetteur optique mettant en oeuvre un multiplexage de polarisation produit un signal modulé au format PDM-QPSK dans un premier mode de fonctionnement, par exemple à un débit de 112Gb/s et un signal modulé au format PDM-BPSK dans le deuxième mode de fonctionnement, par exemple à un débit de 56Gb/s. Dans ce cas, chaque polarisation est modulée par un couple de signaux I et Q tels que décrits précédemment.

Certains des éléments représentés, notamment les unités de commande et autres modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL et compilés sous forme objet. Cette liste n'est pas exhaustive.

L'unité de commande 11 ou 111 peut être réalisée sous la forme d'un dispositif de gestion de réseau permettant à un opérateur humain de sélectionner le mode de fonctionnement du transmetteur en fonction de la demande de trafic et des contraintes physiques de la transmission à réaliser ou capable d'effectuer cette sélection de manière automatique.

Dans les revendications, tout signe de référence entre parenthèses ne saurait être interprété comme une limitation de la revendication.

## Revendications

1. Transmetteur de données numériques (15, 115) comportant une sortie (1, 110) et apte à produire à ladite sortie du transmetteur un signal modulé dans lequel, dans un premier mode de fonctionnement du transmetteur, le signal modulé présente une première constellation d'états (A, B, C, D) dans un plan complexe et, dans un deuxième mode de fonctionnement du transmetteur, le signal modulé présente une deuxième constellation d'états (A, D ; E,F) dans le plan complexe plus réduite que ladite première constellation d'états,
ledit transmetteur comporte :
un premier modulateur d'amplitude (5, 105) apte à moduler un premier signal porteur (7, 107) en fonction d'un premier signal de données (I),
un deuxième modulateur d'amplitude (6, 106) apte à moduler un deuxième signal porteur (8, 108) en fonction d'un deuxième signal de données (Q), ledit transmetteur **caractérisé par le fait qu'**il comporte un combineur de signaux (9, 109) apte à diriger vers une sortie (10, 110) du transmetteur de données une combinaison du premier signal porteur modulé venant du premier modulateur d'amplitude et du deuxième signal porteur modulé venant du deuxième modulateur d'amplitude, et
un module de données (2, 102) apte à engendrer lesdits premier et deuxième signaux de données avec une cadence de modulation commune,
dans lequel, dans un premier mode de fonctionnement du transmetteur, lesdits premier et deuxième signaux porteurs sont mutuellement déphasés et ledit module de données engendre lesdits premier et deuxième signaux de données à partir de données différentes,
et, dans le deuxième mode de fonctionnement du transmetteur, ledit module de données engendre lesdits premier et deuxième signaux de données corrélés l'un à l'autre à partir de données communes, ladite deuxième constellation d'états (A, D ; E,F) étant plus dispersée que ladite première constellation d'états.

2. Transmetteur selon la revendication 1, **caractérisé par le fait que** la deuxième constellation d'états est un sous-ensemble de la première constellation d'états.

3. Transmetteur selon la revendication 1 ou 2, **caractérisé par le fait que** lesdits premier et deuxième signaux porteurs sont sensiblement en quadrature de phase dans le premier mode de fonctionnement du transmetteur.

4. Transmetteur selon la revendication 3, **caractérisé par le fait que** la première constellation d'états est une constellation QPSK.

5. Transmetteur selon la revendication 4, **caractérisé par le fait que** la deuxième constellation d'états est une constellation BPSK.

6. Transmetteur selon l'une des revendications 3 à 5, **caractérisé par le fait que** lesdits premier et deuxième signaux porteurs sont sensiblement en quadrature de phase dans le deuxième mode de fonctionnement du transmetteur.

7. Transmetteur selon l'une des revendications 3 à 5, **caractérisé par le fait que** lesdits premier et deuxième signaux porteurs sont sensiblement en phase dans le deuxième mode de fonctionnement du transmetteur.

8. Transmetteur selon l'une des revendications 1 à 7, **caractérisé par le fait qu'**il comporte un diviseur de signal (116) apte à produire lesdits premier et deuxième signaux porteurs par division d'un signal source en dirigeant une première fraction dudit signal source vers une première branche de transmission (117) comportant ledit premier modulateur d'amplitude et une deuxième fraction dudit signal source vers une deuxième branche de transmission (118) comportant ledit deuxième modulateur d'amplitude.

9. Transmetteur selon la revendication 8, **caractérisé par le fait qu'**il comporte un dispositif déphaseur (120) disposé dans au moins une desdites branches de transmission et apte à appliquer un déphasage entre le premier signal porteur et le deuxième signal porteur.

10. Transmetteur selon la revendication 9, **caractérisé par le fait que** ledit dispositif déphaseur est apte à appliquer un déphasage réglable.

11. Transmetteur selon l'une des revendications 1 à 10, **caractérisé par le fait que** lesdits signaux porteurs sont des signaux optiques.

12. Transmetteur selon la revendication 11, **caractérisé par le fait que** lesdits modulateurs d'amplitude (105, 106) comportent des modulateurs de Mach-Zehnder.

13. Transmetteur selon l'une des revendications 1 à 12, **caractérisé par le fait qu'**il comporte une interface de commande apte à recevoir un signal de commande (12, 112) pour placer sélectivement ledit transmetteur dans le premier ou le deuxième mode de fonctionnement.

14. Transmetteur selon l'une des revendications 1 à 13, **caractérisé par le fait que** ledit module de données (2, 102) comporte une interface d'entrée de données apte à recevoir un flux de données à transmettre et un module de traitement (30, 31, 32, 33) apte à traiter ledit flux de données à transmettre pour engendrer lesdits premier et deuxième signaux de données, ledit module de traitement étant apte à traiter un flux de données d'un premier débit dans la premier mode de fonctionnement et un flux d'un deuxième débit plus faible dans le deuxième mode de fonctionnement du transmetteur.

15. Transmetteur selon la revendication 14, **caractérisé par le fait que** l'interface d'entrée de données comporte une pluralité de lignes d'entrée parallèles (25) pour recevoir des flux entrants parallèles composant le flux de données à transmettre.

16. Transmetteur selon la revendication 15, **caractérisé par le fait que** le module de données est apte à désactiver sélectivement un sous-ensemble desdites lignes d'entrée parallèles dans le deuxième mode de fonctionnement du transmetteur.

17. Transmetteur selon la revendication 15 ou 16, **caractérisé par le fait que** le module de traitement comporte un module de conversion parallèle-série (32) pour produire les premiers et deuxième signaux de données à partir d'une pluralité desdits flux entrants parallèles, les flux entrants présentant une cadence de données commune inférieure à ladite cadence de modulation des premiers et deuxième signaux de données.

18. Transmetteur selon l'une des revendications 14 à 17, **caractérisé par le fait que** le module de traitement comporte un module de codage (31) pour appliquer un code correcteur d'erreur vers l'avant au flux de données à transmettre.

## Patentansprüche

1. Digitaler Datensender (15, 115), welcher einen Ausgang (1, 110) aufweist und dazu ausgelegt ist, an dem besagten Ausgang des Senders ein moduliertes Signal zu erzeugen, wobei das modulierte Signal in einem ersten Betriebsmodus des Senders eine erste Konstellation von Zuständen (A, B, C, D) in einer komplexen Ebene aufweist, und wobei das modulierte Signal in einem zweiten Betriebsmodus des Senders eine zweite Konstellation von Zuständen (A, D; E, F) in der komplexen Ebene aufweist, welche reduzierter als die besagte erste Konstellation von Zuständen ist;
wobei der besagte Sender umfasst:
Einen ersten Amplitudenmodulator (5, 105), welcher dazu ausgelegt ist, ein erstes Trägersignal (7, 107) in Abhängigkeit von einem ersten Datensignal (I) zu modulieren, einen zweiten Amplitudenmodulator (6, 106), welcher dazu ausgelegt ist, ein zweites Trägersignal (8, 108) in Abhängigkeit von einem zweiten Datensignal (Q) zu modulieren, wobei der besagte Sender **dadurch gekennzeichnet ist, dass** er umfasst:
Einen Signalkombinierer (9, 109), welcher dazu ausgelegt ist, eine Kombination des ersten modulierten Trägersignals, welches von dem ersten Amplitudenmodulator kommt, und des zweiten modulierten Trägersignals, welches von dem zweiten Amplitudenmodulator kommt, an einen Ausgang (10, 110) des Datensenders zu leiten, und
ein Datenmodul (2, 102), welches dazu ausgelegt ist, das besagte erste und das besagte zweite Datensignal mit einer gemeinsamen Modulationsrate zu erzeugen,
wobei das besagte erste und das besagte zweite Trägersignal in einem ersten Betriebsmodus des Senders zueinander phasenverschoben sind und das besagte Datenmodul das besagte erste und das besagte zweite Datensignal ausgehend von unterschiedlichen Daten erzeugt,
und das besagte Datenmodul das besagte erste und das besagte zweite Datensignal, welche miteinander korreliert sind, im zweiten Betriebsmodus des Senders ausgehend von gemeinsamen Daten erzeugt, wobei die besagte zweite Konstellation von Zuständen (A, D ; E,F) verstreuter als die besagte erste Konstellation von Zuständen ist.

2. Sender nach Anspruch 1, **dadurch gekennzeichnet, dass** die zweite Konstellation von Zuständen eine Untermenge der ersten Konstellation von Zuständen ist.

3. Sender nach Anspruch 1 oder 2, **dadurch gekennzeichnet, dass** das besagte erste und das besagte zweite Trägersignal im ersten Betriebsmodus des Senders im Wesentlichen in einer Phasenquadraturbeziehung zueinander stehen.

4. Sender nach Anspruch 3, **dadurch gekennzeichnet, dass** die erste Konstellation von Zuständen eine QPSK-Konstellation ist.

5. Sender nach Anspruch 4, **dadurch gekennzeichnet, dass** die zweite Konstellation von Zuständen eine BPSK-Konstellation ist.

6. Sender nach einem der Ansprüche 3 bis 5, **dadurch gekennzeichnet, dass** das besagte erste und das besagte zweite Trägersignal im zweiten Betriebsmodus des Senders im Wesentlichen in einer Phasenquadraturbeziehung zueinander stehen.

7. Sender nach einem der Ansprüche 3 bis 5, **dadurch gekennzeichnet, dass** das besagte erste und das besagte zweite Trägersignal im zweiten Betriebsmodus des Senders im Wesentlichen phasengleich sind.

8. Sender nach einem der Ansprüche 1 bis 7, **dadurch gekennzeichnet, dass** er einen Signalteiler (116) umfasst, welcher dazu ausgelegt ist, das besagte erste und das besagte zweite Trägersignal durch Teilen eines Quellsignals, indem ein erster Bruchteil des besagten Quellsignals an einen ersten Obertragungszweig (117), welcher den besagten erste Amplitudenmodulator einschließt, und ein zweiter Bruchteil des besagten Quellsignals an einen zweiten Übertragungszweig (118), welcher den besagten zweiten Amplitudenmodulator einschließt, geleitet wird, zu erzeugen.

9. Sender nach Anspruch 8, **dadurch gekennzeichnet, dass** er eine Phasenschiebevorrichtung (120) umfasst, welche in mindestens einem der besagten Übertragungszweige angeordnet und für das Anwenden einer Phasenverschiebung zwischen dem ersten Trägersignal und dem zweiten Trägersignal ausgelegt ist.

10. Sender nach Anspruch 9, **dadurch gekennzeichnet, dass** die besagte Phasenschiebevorrichtung für das Anwenden einer einstellbaren Phasenverschiebung ausgelegt ist.

11. Sender nach einem der Ansprüche 1 bis 10, **dadurch gekennzeichnet, dass** die besagten Trägersignale optische Signale sind.

12. Sender nach Anspruch 11, **dadurch gekennzeichnet, dass** die besagten Amplitudenmodulatoren (105, 106) Mach-Zehnder-Modulatoren umfassen.

13. Sender nach einem der Ansprüche 1 bis 12, **dadurch gekennzeichnet, dass** er eine Steuerschnittstelle umfasst, welche für den Empfang eines Steuersignals (12, 112) ausgelegt ist, um den besagten Sender selektiv in den ersten oder den zweiten Betriebsmodus zu versetzen.

14. Sender nach einem der Ansprüche 1 bis 13, **dadurch gekennzeichnet, dass** das besagte Datenmodul (2, 102) eine Dateneingangsschnittstelle, die für den Empfang eines zu übertragenden Datenflusses ausgelegt ist, und ein Verarbeitungsmodul (30, 31, 32, 33), welches dazu ausgelegt ist, den besagten zu übertragenden Datenstrom zu verarbeiten, um das besagte erste und das besagte zweite Datensignal zu erzeugen, umfasst, wobei das besagte Verarbeitungsmodul dazu ausgelegt ist, in dem ersten Betriebsmodus einen Datenstrom mit einer ersten Datenrate und in dem zweiten Betriebsmodus des Senders einen Datenstrom mit einer zweiten, niedrigeren Datenrate zu verarbeiten.

15. Sender nach Anspruch 14, **dadurch gekennzeichnet, dass** die Dateneingangsschnittstelle eine Vielzahl von parallelen Eingangsleitungen (25) für den Empfang der eingehenden parallelen Ströme, aus denen der zu übertragende Datenstrom zusammengesetzt ist, umfasst.

16. Sender nach Anspruch 15, **dadurch gekennzeichnet, dass** das Datenmodul dazu ausgelegt ist, in dem zweiten Betriebsmodus des Senders eine Untermenge der besagten parallelen Eingangsleitungen selektiv zu deaktivieren.

17. Sender nach Anspruch 15 oder 16, **dadurch gekennzeichnet, dass** das Verarbeitungsmodul ein Modul zur Parallel-Serien-Umsetzung (32) umfasst, um ausgehend von einer Vielzahl der besagten eingehenden parallelen Ströme das erste und das zweite Datensignal zu erzeugen, wobei die eingehenden Ströme eine gemeinsame Datenrate aufweisen, welche niedriger als die besagte Modulationsrate des ersten und des zweiten Datensignals ist.

18. Sender nach einem der Ansprüche 14 bis 17, **dadurch gekennzeichnet, dass** das Verarbeitungsmodul ein Codiermodul (31) zum Anwenden eines Vorwärtsfehlerkorrekturcodes auf den zu übertragenden Datenstrom umfasst.

## Claims

1. A digital data transmitter (15, 115) comprising an output (1, 110) and capable of producing a modulated signal at said output of the transmitter wherein, in a first operating mode of the transmitter, the modulated signal exhibits a first state constellation (A, B, C, D) in a complex plane and, in a second operating mode of the transmitter, the modulated signal exhibits a second state constellation (A, D; E,F) in the complex plane smaller than said first consolation of states,
said transmitter comprises:
a first amplitude modulator (5, 105) capable of modulating a first carrier signal (7, 107) based on a first data signal (I),
a second amplitude modulator (6, 106) capable of modulating a second carrier signal (8, 108) based on a second data signal (Q), said transmitter **characterized by** the fact that it comprises a signal combiner (9, 109) capable of directing to an output (10, 110) of the data transmitter a combination of the modulated first carrier signal coming from the first amplitude modulator and the modulated second carrier signal coming from the second amplitude modulator, and
a data module (2, 102) capable of generating said first and second data signals with a common rate of modulation,
wherein, in a first operating mode of the transmitter, said first and second carrier signals are phase-shifted from one another and said data module generates said first and second data signals based on different data,
and, in the second operating mode of the transmitter, said data module generates said first and second data signals correlated with one another based on shared data, said second state constellation (A, D; E,F) being more dispersed than said first state constellation.

2. A transmitter according to claim 1, **characterized by** the fact that the second state constellation is a subset of the first state constellation.

3. A transmitter according to claim 1 or 2, **characterized by** the fact that said first and second carrier signals are substantially in phase-quadrature in the first operating mode of the transmitter.

4. A transmitter according to claim 3, **characterized by** the fact that the first state constellation is a QPSK constellation.

5. A transmitter according to claim 4, **characterized by** the fact that the second state constellation is a BPSK constellation.

6. A transmitter according to one of the claims 3 to 5, **characterized by** the fact that said first and second carrier signals are substantially in phase-quadrature in the second operating mode of the transmitter.

7. A transmitter according to one of the claims 3 to 5, **characterized by** the fact that said first and second carrier signals are substantially in phase in the second operating mode of the transmitter.

8. A transmitter according to one of the claims 1 to 7, **characterized by** the fact that it comprises a signal splitter (116) capable of producing said first and second carrier signals by splitting a source signal and directing a first fraction of said source signal to a first transmission branch (117) comprising said first amplitude modulator and a second fraction of said source signal to a second transmission branch (118) comprising said second amplitude modulator.

9. A transmitter according to claim 8, **characterized by** the fact that it comprises a phase-shifting device (120) disposed in at least one of said transmission branches and capable of applying a phase shift between the first carrier signal and the second carrier signal.

10. A transmitter according to claim 9, **characterized by** the fact that said phase-shifting device is capable of applying an adjustable phase-shift.

11. A transmitter according to one of the claims 1 to 10, **characterized by** the fact that said carrier signals are optical signals.

12. A transmitter according to claim 11, **characterized by** the fact that said amplitude modulators (105, 106) comprise Mach-Zehnder modulators.

13. A transmitter according to one of the claims 1 to 12, **characterized by** the fact that it comprises a control interface capable of receiving a control signal (12, 112) in order to selectively put said transmitter into the first or second operating mode.

14. A transmitter according to one of the claims 1 to 13, **characterized by** the fact that said data module (2, 102) comprises a data input interface capable of receiving a flow of data to be transmitted and a processing module (30, 31, 32, 33) capable of processing said data flow to be transmitted in order to generate said first and second data signals, said processing module being capable of processing a data flow with a first bit rate in the first operating mode and a flow with a second, lower bit rate in the second operating mode of the transmitter.

15. A transmitter according to claim 14, **characterized by** the fact that the data input interface comprises a plurality of parallel input lines (25) for receiving parallel incoming flows composing the data flow to be transmitted.

16. A transmitter according to claim 15, **characterized by** the fact that the data module is capable of selectively disabling a subset of said parallel input lines in the second operating mode of the transmitter.

17. A transmitter according to claims 15 or 16, **characterized by** the fact that the processing module comprises a parallel-serial conversion module (32) for producing the first and second data signals based on a plurality of said parallel incoming flows, the incoming flows exhibiting a shared data rate less than said modulation rate of the first and second data signals.

18. A transmitter according to one of the claims 14 to 17, **characterized by** the fact that the processing module comprises a coding module (31) for applying a forward error correction code to the data flow to be transmitted.
